(19) **Europäisches Patentamt / European Patent Office / Office européen des brevets**

(11) **EP 4 475 975 B1**

(12) **EUROPÄISCHE PATENTSCHRIFT**

(45) Veröffentlichungstag und Bekanntmachung des Hinweises auf die Patenterteilung:
**25.02.2026 Patentblatt 2026/09**

(21) Anmeldenummer: **22809717.6**

(22) Anmeldetag: **25.10.2022**

(51) Internationale Patentklassifikation (IPC):
**B01D 25/00** *(2006.01)* **B01D 29/21** *(2006.01)*
**B01D 29/54** *(2006.01)*

(52) Gemeinsame Patentklassifikation (CPC):
**B01D 29/21; B01D 25/00; B01D 29/54;**
B01D 2201/298

(86) Internationale Anmeldenummer:
**PCT/EP2022/079720**

(87) Internationale Veröffentlichungsnummer:
**WO 2023/151837 (17.08.2023 Gazette 2023/33)**

(54) **FILTERVORRICHTUNG**

FILTER APPARATUS

APPAREIL DE FILTRATION

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **10.02.2022 DE 102022000510**

(43) Veröffentlichungstag der Anmeldung:
**18.12.2024 Patentblatt 2024/51**

(73) Patentinhaber: **HYDAC FluidCareCenter GmbH
66280 Sulzbach/Saar (DE)**

(72) Erfinder:
• **KOCH, Edwin
  66636 Tholey (DE)**
• **LANG, Timo
  66539 Neunkirchen (DE)**
• **MÜLLER, Daniel
  66539 Neunkirchen (DE)**
• **NOLL, Martin
  66386 St. Ingbert (DE)**

(74) Vertreter: **Bartels und Partner, Patentanwälte
Lange Strasse 51
70174 Stuttgart (DE)**

(56) Entgegenhaltungen:
**DE-A1- 102018 202 178 DE-B- 1 084 242**

• **CJC RATGEBER ÖL: "Das Synonym für Ölpflege", 25 July 2021 (2021-07-25), pages 1 - 56, XP093018354, Retrieved from the Internet <URL:https://www.cjc.de/wp-content/uploads/2018/05/Ratgeber-Oel_DE.pdf> [retrieved on 20230127]**

**Beschreibung**

Die Erfindung betrifft eine Filtervorrichtung mit den Merkmalen im Oberbegriff von Anspruch 1, die auf dem Markt in einer Vielzahl von Ausführungsformen frei erhältlich ist. Derartige Filtervorrichtungen dienen dazu, in einem Filtergehäuse eingesetzt, zugeführtes verschmutztes Fluid, beispielsweise in Form eines Hydraulikmediums, durch den Einsatz des Filtermaterials eines Filterelementes von Partikelverschmutzung abzureinigen und das derart abgereinigte Fluid aus dem Filtergehäuse heraus in den Fluid-, insbesondere Hydraulikkreislauf, zurückzuführen. Ist nach einer Vielzahl von Filterzyklen das Filtermaterial dergestalt mit Verschmutzungen zugesetzt, ist es verbraucht und das Filterelement ist aus dem Vorrichtungsgehäuse zu entfernen und gegen ein Neuelement für den Weiterbetrieb zu tauschen.

Durch EP 3 334 512 B1 ist eine Ölfiltrationseinheit bekannt zur Entfernung von festen Partikeln aus dahingehend kontaminiertem Öl, umfassend:

- ein Gehäuse, das einen Gehäuseeinlass umfasst, der geeignet ist, kontaminiertes Öl aus der Umgebung aufzunehmen und das kontaminierte Öl an eine innere Öffnung des Gehäuses bei einem ersten Druck p1 abzugeben und ein Gehäuseauslass, der geeignet ist, gefiltertes Öl an die Umgebung abzugeben, und

- einen Ölfilter zum Filtern des kontaminierten Öls, wobei der Ölfilter in der inneren Öffnung des Gehäuses angeordnet ist und einen Filtereinlass umfasst, der durch eine Außenfläche des Ölfilters definiert ist, ein inneres Filtervolumen, das geeignet ist, um gefiltertes Öl bei einem zweiten Druck p2 aufzunehmen, wobei der zweite Druck p2 niedriger als der erste Druck p1 ist, und ein Filterauslass innerhalb des Gehäuses, der eine Fluid/Flüssigkeitsverbindung zwischen dem inneren Filtervolumen und dem Gehäuseauslass bereitstellt, um das gefilterte Öl aus dem inneren Filtervolumen abzulassen,

wobei eine Endplatte des Ölfilters den Filterauslass umfasst, wobei die gesamte Endplatte ein poröses Material umfasst, durch das Öl fließen kann, so dass zumindest ein Teil der Endplatte einen Teil des Filterauslasses bildet, und

wobei der Filterauslass einen hydraulischen Widerstand umfasst, der einen Teil des Ölfilters bildet, wobei jener hydraulische Widerstand eine Fluid/-Flüssigkeit-Strömungsbegrenzung zwischen dem inneren Filtervolumen und dem Gehäuseauslass bereitstellt, um den zweiten Druck p2 innerhalb des inneren Filtervolumens zu erhöhen und um das gefilterte Öl aus dem inneren Filtervolumen in den Gehäuseauslass bei einem dritten Druck p3 abzulassen, wobei der dritte Druck p3 niedriger ist als der zweite Druck p2.

Des Weiteren ist durch DE 10 2005 014 360 A1 ein Filterelement mit einem Filtermaterial bekannt, das sternförmig gefaltet einzelne Filterfalten aufweist, wobei zumindest teilweise in den Abstand zweier benachbarter Filterfalten und/oder innenumfangsseitig und/oder außenumfangsseitig zu den Filterfalten angeordnet sich mindestens ein fluiddurchlässiges Stützmittel erstreckt, das mit filteraktiven Substanzen versehen ist oder selbst aus solchen filteraktiven Substanzen aufgebaut ist. Dergestalt ist eine Art Filterhilfsmittel erhalten, das zur Reduzierung des die Standzeit vermindernden Einflusses von Fluidbestandteilen dient, sei es in Form spezifischer Öl-Alterungsprodukte, die fachsprachlich auch mit Varnish bezeichnet sind; sei es in Form von sonstigen das Fluid schädigenden Medien. Bei der dahingehend bekannten Filterelementanordnung wird das Filtermaterial und das fluiddurchlässige Stützmittel immer in Reihe hintereinander durchströmt.

Die DE 10 2018 202 178 A1 beschreibt eine Filtervorrichtung bestehend aus einer in einer Baueinheit zusammengefassten Kombination von verschiedenen Filterelementen, von denen ein Filterelement der Abreinigung von Partikeln und ein anderes Filterelement der Abreinigung von Ölalterungsprodukten aus einem Fluidstrom dient, wobei die Filterelemente für die dahingehende Abreinigung des Fluidstroms parallel zueinander geschaltet sind.

Weitere Filtervorrichtungen gehen aus einer Druckschrift "CJC Ratgeber Öl" und der DE 1 084 242 hervor.

Ausgehend von diesem Stand der Technik liegt der Erfindung die Aufgabe zugrunde, die bekannten Filtervorrichtungslösungen zu verbessern.

Eine dahingehende Aufgabe löst eine Filtervorrichtung mit den Merkmalen des Patentanspruches 1 in seiner Gesamtheit.

Gemäß dem Kennzeichen von Anspruch 1 ist vorgesehen, dass das Filterelement für die Partikelabreinigung ein plissiertes Elementmaterial aufweist, dass das Filterelement für die Aufnahme der Ölalterungsprodukte aus einzelnen ringförmigen Scheiben in Übereinanderanordnung gebildet ist, die zumindest teilweise aus Zellulose bestehen, und dass die einzelnen ringförmigen Filterscheiben außenumfangsseitig Ausnehmungen aufweisen, die durch Einschnitte, Einprägungen oder durch benachbarte Abstandhalter zwischen den Filterscheiben gebildet sind.

Die Filtervorrichtung besteht aus einer in einer Baueinheit zusammengefassten Kombination von verschiedenen Filterelementen, von denen ein Filterelement der Abreinigung von Partikeln respektive festen Kontaminanten und ein anderes Filterelement der Abreinigung von Ölalterungsprodukten (Varnish) aus einem Fluidstrom dient, wobei die Filterelemente für die dahingehende Abreinigung des Fluidstroms parallel zueinander geschaltet sind. Dergestalt ist die Möglichkeit eröffnet, den zu behandelnden Fluidstrom aufzuteilen und jeweils in einem vorgebbaren Aufteilungsverhältnis das jeweilige Filterelement mit der speziellen Abreinigungsmöglichkeit anzusteuern. Dergestalt ist in besonders effizienter Weise die Behandlung des Fluidstroms ermöglicht. Solche Filtervorrichtungen sind grundsätzlich Bestandteil hydraulischer Versorgungskreisläufe, sodass im Rahmen der Kreislaufführung ein bereits von der Baueinheit behandeltes Fluid wieder der Filtervorrichtung erneut zugeführt wird. Des Weiteren werden die Ölalterungsprodukte respektive Varnish in der Literatur regelmäßig nicht als "harte" Partikel aufgelistet, sodass diese eben keine partikuläre Verschmutzung im eigentlichen Sinn darstellen; vielmehr handelt es sich regelmäßig um eine Art schlammartige Verschmutzung des Fluidstroms.

Vorzugsweise ist dabei vorgesehen, dass die Filterelemente in Übereinanderanordnung die Baueinheit bilden und mit ihrem jeweiligen Elementmaterial eine Unfiltratseite von einer Fitratseite separieren, die von dem jeweiligen Elementmaterial umfasst ist. Dergestalt besteht die Möglichkeit, entlang der gesamten Außenumfangsseite der Baueinheit eine kontinuierliche Anströmung sowie Durchströmung mit dem zu behandelnden Fluidstrom über die gesamte Filterelementfläche in gleichförmiger Weise zu erreichen.

Das Filterelement für die Partikelabreinigung weist ein plissiertes, vorzugsweise mehrlagiges, Elementmaterial auf und das Filterelement für die Aufnahme der Ölalterungsprodukte ist aus einzelnen ringförmigen Scheiben in Übereinanderanordnung gebildet, die zumindest teilweise aus Zellulose, vorzugsweise vollständig aus Zellulose, bestehen. Aufgrund der Plissierung des Elementmaterials ist die Oberfläche für das Filterelement entsprechend vergrößert, sodass sich in hohem Maße Feststoffpartikel aus dem Fluidstrom abreinigen lassen. Während die im Stand der Technik aus Zellulose bestehenden Filterelemente überwiegend gleichfalls für die Partikelabreinigung (EP 3 334 512 B1) verwendet werden oder der Abtrennung von Wasser aus dem Öl-Fluidstrom (WO 2018/082799 A1) dienen, werden im Sinne der Erfindung die ringförmigen, zellulosehaltigen Scheiben zur Abreinigung von Ölalterungsprodukten (Varnish) eingesetzt, wobei bei der Durchströmung mit dem Fluid die Zellulosefasern, wie im Stand der Technik auch, nach wie vor koaleszierend wirken, wodurch sich aus dem Wasseranteil der ölhaltigen Emulsion vergrößerte Tropfen bilden, die aufgrund des Dichteunterschiedes von Wasser und Öl nach unten absinken, sodass es auch insoweit zu einer Abtrennung von weniger dichtem Medium kommt und somit zu einer Abtrennung von Wasser aus dem Hydraulikmedium.

Bei einer weiteren bevorzugten Ausführungsform der erfindungsgemäßen Filtervorrichtung ist vorgesehen, dass die aus den Filterelementen gebildete Baueinheit endseitig jeweils eine Endkappe aufweist, von denen die eine das Filterelement für die Partikelabreinigung bodenseitig abschließt und die andere, das Filterelement für die Abreinigung der Ölalterungsprodukte kopfseitig abschließende Endkappe, eine Durchlassöffnung für den Filtratstrom aufweist. Dergestalt ist die Baueinheit als Ganzes ein Austauschprodukt, das bei verbrauchtem Filterelementmaterial im Rahmen einer Gesamtvorrichtung gegen eine neue, unverbrauchte Baueinheit tauschbar ist.

Bei einer besonders bevorzugten Ausführungsform der erfindungsgemäßen Filtervorrichtung ist vorgesehen, dass auf der Filtratseite der Baueinheit mindestens eine Drossel- oder Blendenstelle vorhanden ist, die den Fluidvolumenstrom zwischen den einzelnen Filterelementen in einem vorgebbaren Verhältnis aufteilt. Da häufig das Zellulosematerial das gegenüber dem plissierten Filterelementmaterial dichtere Abreinigungsmedium bildet, ist insoweit der Durchströmungswiderstand für das Zelluloseelement erhöht, sodass für eine zeitgleiche, gleichmäßige Durchströmung der Baueinheit auf der Filtratseite die Drossel- oder Blendenstelle, vorzugsweise am Fluidausgang des Filterelementes für die Partikelfiltration und am benachbarten Eingang des Filterelementes für die Abreinigung der Ölalterungsprodukte, auf der Filtratseite angeordnet ist. Dergestalt lässt sich am Ausgang des Partikelfilterelementes der Durchströmungswiderstand in Richtung der Filtratabgabeseite für den Partikelfilter erhöhen, sodass es zu einer vergleichmäßigten Fluiddurchströmung für beide übereinander angeordneten Filterelemente kommt.

Besonders platzsparend ist dabei die Drossel- oder Blendenstelle in einer Zwischenkappe zwischen dem einen und dem anderen Filterelement angeordnet.

Bei einer weiteren bevorzugten Ausführungsform der erfindungsgemäßen Filtervorrichtung ist vorgesehen, dass alle Filterscheiben mit dem Zellulosematerial dieselben Filtereigenschaften aufweisen, insbesondere dieselbe Filterfeinheit besitzen, und dass die ringförmigen Filterscheiben von ihrem Elementmaterial her allesamt gleich aufgebaut sind. Dergestalt ist eine Art Stack- oder Stapelaufbau erreicht, wobei die Filterscheiben als Gleichbauteile in vorgebbarer Anzahl, je nach Filtrationsaufgabe übereinander stapelbar sind, um dergestalt ein Varnish-Element vorgebbarer Bauhöhe zu erhalten.

Für eine verbesserte, turbulenzarme Anströmung ist vorgesehen, dass die einzelnen ringförmigen Filterscheiben außenumfangsseitig Ausnehmungen aufweisen, die durch Einschnitte, Einprägungen oder benachbarte Abstandhalter zwischen den Filterscheiben gebildet sind.

Die genannten Filterscheiben aus Zellulose werden in Anlehnung an DIN EN ISO 5269-2 nach dem sogenannten Rapid-Köthen-Verfahren hergestellt und als insoweit standardisiertes Verfahren ist eine hohe Prozesssicherheit bei der Herstellung erreicht.

Im Folgenden wird die erfindungsgemäße Filtervorrichtung anhand von Ausführungsbeispielen nach der Zeichnung näher erläutert. Dabei zeigen in prinzipieller und nicht maßstäblicher Darstellung die

Fig. 1     in der Art eines Längsschnittes die Filtervorrichtung als Ganzes;

Fig. 2     eine Seitenansicht auf eine geänderte Ausführungsform einer Filtervorrichtung nach der Fig. 1;

Fig. 3     eine perspektivische Schrägansicht auf eine weitere, geänderte Ausführungsform einer Filtervorrichtung nach den Fig. 1 und 2; und

Fig. 4     in der Art eines hydraulischen Schaltplanes die prinzipielle Parallelschaltung der Filtervorrichtung nach den Fig. 1 bis 3; integriert in einem vereinfacht wiedergegebenen hydraulischen Versorgungskreislauf mit einer Motor-Pumpeneinheit sowie einem Vorratstank.

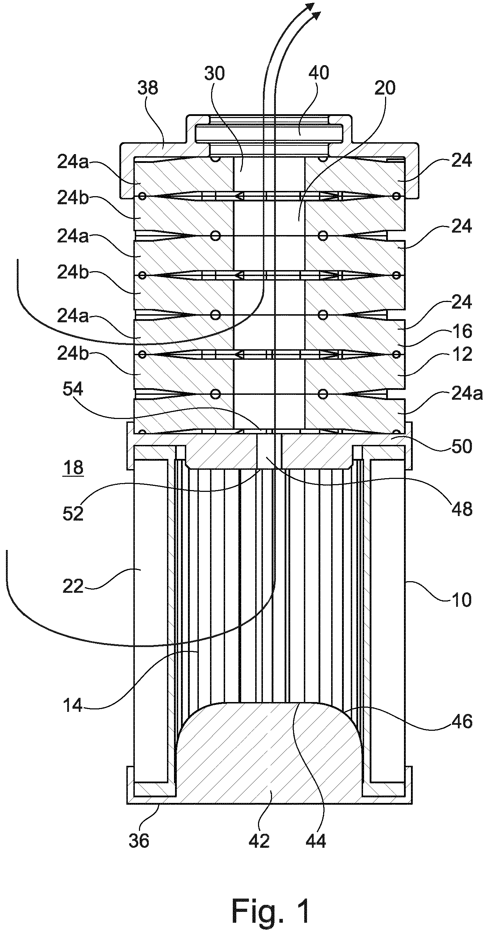

Die Fig. 1 zeigt die Filtervorrichtung als Ganzes, die insoweit eine Baueinheit bildet und eine zusammengefasste Kombination von zwei verschiedenen Filterelementen 10, 12 darstellt, von denen ein Filterelement 10 vorrangig der Abreinigung von Partikeln und ein anderes Filterelement 12 vorrangig der Abreinigung von Ölalterungsprodukten (Varnish) aus einem Fluidstrom dient, wobei die Fluidführung in der Fig. 1 linienförmig angedeutet ist, mit endseitig angebrachten Pfeilen, die die Durchströmungsrichtung wiedergeben. Demgemäß wird also die Filtervorrichtung als Ganzes von außen nach innen durchströmt. Aus der Pfeildarstellung nebst Linienführung wird auch deutlich, dass die beiden Filterelemente 10, 12 für die dahingehende Abreinigung des Fluidstroms parallel zueinander geschaltet sind. Das abzureinigende Fluid kann aus einem Hydraulikmedium respektive Hydrauliköl bestehen, aber auch aus einem sonstigen Fluid das der hier angesprochenen Abreinigung zugänglich ist. Die in Fig. 1 gezeigte Filtervorrichtung besteht nur aus zwei Filterelementen 10, 12; eine anders gewählte Anordnung mit weiteren Filterelementen (nicht dargestellt) ist im Rahmen der erfindungsgemäßen Vorrichtungslösung aber möglich.

Die Fig. 1 zeigt die übliche Betriebsstellung für die Filtervorrichtung und die Filterelemente 10, 12 bilden in Übereinanderanordnung die Baueinheit und separieren mit ihrem jeweiligen Elementmaterial 14, 16 eine sogenannte Unfiltratseite 18 von einer Filtratseite 20, die von dem jeweiligen Elementmaterial 14, 16 hohlzylindrisch umfasst ist. In der in der Fig. 1 gezeigten Anordnung ist oberhalb des einen Filterelementes 10 das andere Filterelement 12 angeordnet; es besteht aber auch grundsätzlich die Möglichkeit, die dahingehende Anordnung im Bedarfsfall umzudrehen (nicht dargestellt). Die gezeigte Anordnung ist aber im Hinblick auf das Durchströmungsverhalten des Fluids von besonderem Vorteil, was im Folgenden noch näher erläutert wird.

Das Filterelement 10 für die Partikelabreinigung weist ein plissiertes, vorzugsweise mehrlagiges Elementmaterial 14 auf. Der mehrlagige Aufbau eines solchen Elementmaterials 14 oder Filtermediums kann beispielsweise von der einen Seite zur anderen Seite hin folgenden Schichtaufbau aufweisen:

1. Metalldrahtgewebe, Kunststoffgewebe oder Kunststoffgitter mit Netzstruktur,

2. Polyestervlies,

3. Glasfasermatte oder Melt-Blown-Vlies,

4. Papiervlies, Glasfasermatte oder Melt-Blown-Vlies,

5. Polyestervlies und

6. Edelstahl-Polyester-Mischgewebe, Metalldrahtgewebe, Kunststoffgewebe oder Kunststoffgitter mit Netzstruktur.

Es sei an dieser Stelle betont, dass der dahingehende Lagenaufbau nur beispielhaft ist, sich aber im Rahmen der Partikelfiltration als besonders bewährt erwiesen hat. Es besteht aber auch die Möglichkeit eines anderen Aufbaus, wobei grundsätzlich von Vorteil ist, wenn eine Vorfilterlage in Durchströmungsrichtung des Fluids gesehen einer Hauptfilterlage vorgeschaltet ist. Auch kann es von Vorteil sein, für eine Stützfunktion der einzelnen Filterfalten, diese in unterschiedlich großer Faltenhöhe auszubilden, wobei vorzugsweise Falten geringerer Faltenhöhe zwischen Falten mit demgegenüber größerer Faltenhöhe zwischengeschaltet sind. Ferner kann sich die sterngefaltete Filterlage in Form des Elementmaterials 14 in üblicher Weise an einem hohlzylindrischen perforierten Stützrohr 22 abstützen.

Das Filterelement 12 für die Aufnahme der Ölalterungsprodukte respektive Varnish besteht aus einzelnen ringförmigen Scheiben 24, die in Übereinanderanordnung eine Stack- oder Stapelfolge bilden. Die dahingehenden Scheiben bestehen zumindest teilweise aus Zellulose, vorzugsweise sind diese vollständig aus Zellulosematerial aufgebaut.

Wie insbesondere die Fig. 1 zeigt, können die einzelnen Filterscheiben 24 bei einer Ausführungsform auch aus Teilhälften 24a, 24b gebildet sein, die zwischen sich diametral zur Längsachse der Baueinheit gesehen, einander gegenüberliegend gleichgebildete Ausnehmungen 26 aufweisen, die durch kerbartige Einschnitte oder Prägungen in den Filterscheiben 24 gebildet sind, oder von zwei Filterscheibenhälften 24a, 24b einer jeweiligen Filterscheibe 24 aneinandergrenzend ausgestaltet sind. Ferner befinden sich in der Stapelabfolge zwischen den Filterscheiben 24 entsprechend weitere Ausnehmungen 28, die entsprechend den Ausnehmungen 26 ausgebildet sind. Die jeweilige Ausnehmung 26, 28 läuft damit von einem rechteckförmigen Mittenbereich randseitig sich keilartig verjüngend in die jeweilige Filterscheibe 24 aus, oder in die benachbart angeordneten Scheibenhälften 24a, 24b. Die genannten Ausnehmungen 26, 28 in der Art von Einschnitten oder Einprägungen sind nur an der Oberseite des jeweiligen Elementmaterials 16 angeordnet und greifen, wie dies insbesondere die Fig. 1 zeigt, nicht in den hohlzylindrischen Innenraum 30 des Filterelementes 12 ein, der insoweit die Filtratseite 20 der Filtervorrichtung mit ausbildet.

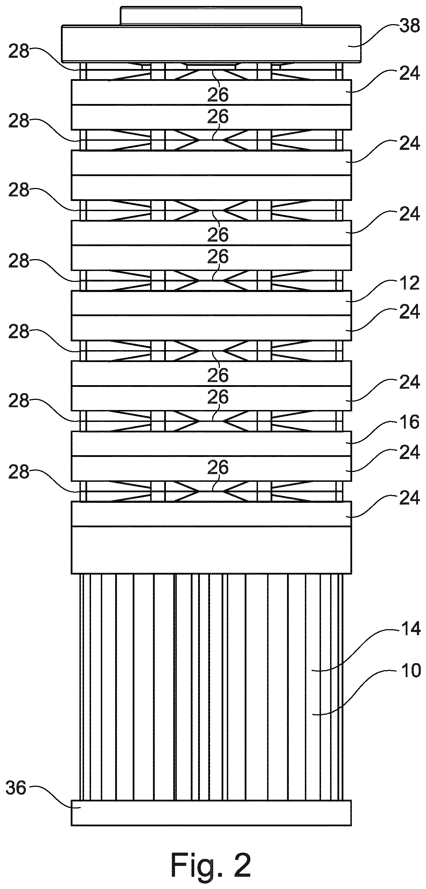

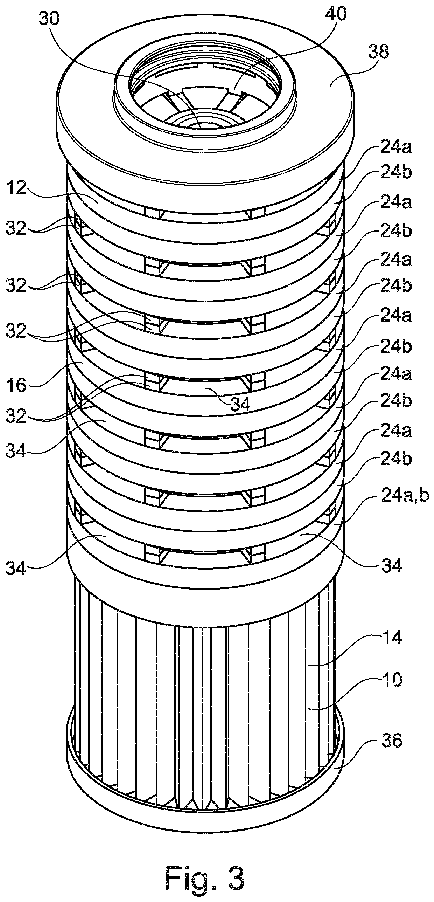

Bei der insoweit abgeänderten Ausführungsform nach der Fig. 2 sind die Ausnehmungen 26, 28 durch entsprechende umfangsseitige Einprägungen oder Einschnitte gebildet, wobei in jedem Fall die Ausnehmungen 26, 28 die Stabilität des Zelluloseelementes als Ganzes aussteifen und einer verbesserten Strömungsführung für den Unfiltratstrom von außen in den Innenraum 30 des Filterelementes 12 dienen. In jedem Fall sind jeder Filterscheibe oder zwischen den Scheibenhälften 24a, 24b einer Filterscheibe 24 jeweils vier in einer gemeinsamen Radialebene liegende Ausnehmungen 26, 28 vorhanden. Insbesondere ist das bis auf seine Porosität geschlossen ausgebildete, scheibenförmige Elementmaterial 16 aus einer Filterronde gebildet, das vom Blattbildner stammt. Bei der Ausführungsform nach der Fig. 3 weisen die einzelnen Scheibenhälften 24a, 24b miteinander einzelne Filterscheiben 24 bildend, einander zugewandt radialverlaufende Begrenzungsstäbe als Abstandhalter 32 auf, die Ausnehmungen 34 zwischen sich begrenzen, die wiederum einer verbesserten kanalartigen Fluidführung dienen, aber wiederum nicht vollständig das filternde Elementmaterial 16 durchgreifen, vergleichbar den Ausnehmungen 26, 28 nach den vorangehend beschriebenen Ausführungsformen. Die insoweit übereinander angeordneten Scheiben 24 dienen dem Abreinigen von Ölalterungsprodukten aus dem Fluidstrom gemäß der Pfeillinien-Darstellung nach der Fig. 1. Insoweit findet also eine gleichzeitige parallele Anströmung beider Filterelemente 10, 12 von der Unfiltratseite 18 zur Filtratseite 20 hin statt.

Wie des Weiteren die Fig. 1 zeigt, kann auch die in Blickrichtung auf die Figur gesehen zuunterst angeordnete Scheibe 24 nur hälftig in Form einer Teilhälfte 24a vorgesehen sein. Wie sich des Weiteren aus den Fig. 1 bis 3 ergibt, weist die aus den Filterelementen 10, 12 gebildete Baueinheit endseitig jeweils eine Endkappe 36, 38 auf, von denen die eine 36 das Filterelement 10 für die Partikelabreinigung bodenseitig abschließt und die andere, das Filterelement 12 für die Abreinigung der Ölalterungsprodukte kopfseitig abschließende Endkappe 38 weist eine Durchlassöffnung 40 für die Abgabe des Filtratstroms aus der Filtervorrichtung auf. Gemäß der Darstellung nach der Fig. 1 kann die untere Bodenkappe 36 zur Verbesserung der Strömungsführung eine Strömungsleiteinrichtung 42 aufweisen, die in die Filtratseite 20 des Filterelementes 10 hineinragt. Im vorliegenden Fall ist die Strömungsleiteinrichtung 42 aus einem massiven Block gebildet, der stirnseitig eine Begrenzungsebene 44 aufweist, die quer zur Längsachse der Filtervorrichtung verläuft und die randseitig in einen konvex verlaufenden Umfassungsrand 46 ausmündet, der nach außen hin von dem Stützrohr 22 begrenzt ist. Die Höhe der Strömungsleiteinrichtung 42 beträgt vorzugsweise 1/5 bis 1/4 der Bauhöhe des Filterelementes 10 für die Partikelabreinigung.

Wie sich des Weiteren aus der Fig. 1 ergibt, ist auf der Filtratseite 20 der Baueinheit mittig eine Drossel- oder Blendenstelle 48 vorhanden, die den Fluidvolumenstrom zwischen den einzelnen benachbarten Filterelementen 10, 12 in einem vorgebbaren Verhältnis je nach gewählter freier Querschnittsfläche aufteilt. Die Drosseloder Blendenstelle 48 ist in einer Zwischenkappe 50 zwischen dem einen 10 und dem anderen Filterelement 12 angeordnet. Insbesondere befindet sich die Drosseloder Blendenstelle 48 am Fluidausgang 52 des Filterelementes 10 für die Partikelfiltration und am demgemäß benachbarten Eingang 54 des Filterelementes 12 für die Abreinigung für die Ölalterungsprodukte und insoweit auf der Filtratseite 20.

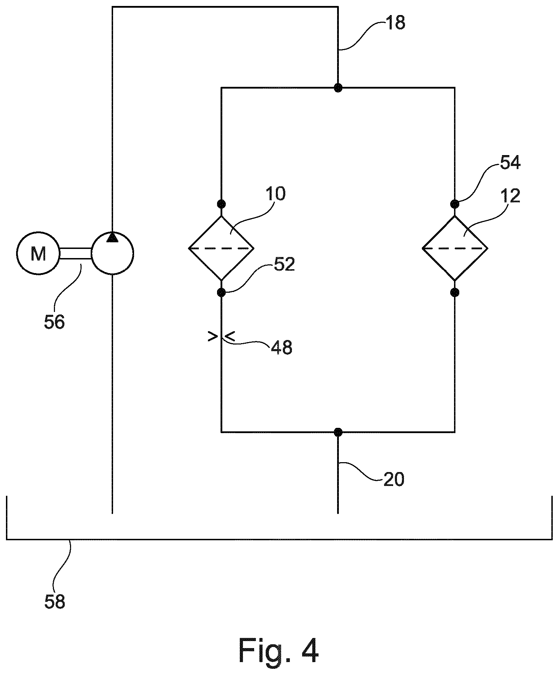

In der Fig. 4 ist die prinzipielle Funktion der Drossel- oder Blendenstelle 48 anhand eines hydraulischen Versorgungskreislaufes mit einer Motor-Pumpen-Einheit 56 näher dargestellt. Diese Motor-Pumpen-Einheit 56 entnimmt Hydraulikfluid aus einem Vorratstank 58 und versorgt im Rahmen der genannten Parallelschaltung beide Filterelemente 10, 12 gleichermaßen mit Fluid, wobei, wie bereits dargelegt, die Drossel- oder Blendenstelle 48 in Fluidströmungsrichtung gesehen am Ausgang 52 des Filterelementes 10 für die partikuläre Verschmutzung angeordnet ist. Im Rahmen der hier angesprochenen Parallelschaltung hat insoweit die Androsselung des Fluidstroms am Ausgang 52 des Filterelementes 10 Einfluss auf die Fluidversorgung am Eingang 54 des Filterelementes 12. Im Rahmen der vereinfachten Darstellung nach der Fig. 4 münden dann auf der Filtratausgangsseite beider Filterelemente 10, 12 der Filtratstrom in den Vorratstank 58 zurück; in der Praxis sind aber an die Filtratseite 20 der Filtervorrichtung regelmäßig hydraulische Komponenten, wie beispielsweise hydraulische Arbeitszylinder, Ventileinrichtungen, Hydrospeicher etc. angeschlossen, die für einen sinnfälligen Betrieb eben abgereinigtes Fluid von der Filtervorrichtung stammend benötigen. Dabei ergibt sich der Gesamtwiderstandswert $R_{ges}$ wie folgt:

$$\frac{1}{\sqrt{R_{ges}}} = \frac{1}{\sqrt{R_1}} + \frac{1}{\sqrt{R_2}}$$

wobei $R_1$ und $R_2$ der jeweilige Einzelwiderstand eines Teilstrangs mit dem zugehörigen Filterelement 10, 12 ist. Hierdurch ergibt sich ein Gesamtvolumenstrom V nach folgender Formel:

$$V = \sqrt{\frac{\Delta p}{R_{ges}}}$$

wobei $\Delta p$ der Gesamtdruckverlust für die Filtervorrichtung ist.

## Patentansprüche

1. Filtervorrichtung bestehend aus einer in einer Baueinheit zusammengefassten Kombination von verschiedenen Filterelementen (10, 12), von denen ein Filterelement (10) der Abreinigung von Partikeln und ein anderes Filterelement (12) der Abreinigung von Ölalterungsprodukten aus einem Fluidstrom dient, wobei die Filterelemente (10, 12) für die dahingehende Abreinigung des Fluidstroms parallel zueinander geschaltet sind,
**dadurch gekennzeichnet,**

   **dass** das Filterelement (10) für die Partikelabreinigung ein plissiertes Elementmaterial (14) aufweist, dass das Filterelement (12) für die Aufnahme der Ölalterungsprodukte aus einzelnen ringförmigen Scheiben (24) in Übereinanderanordnung gebildet ist, die zumindest teilweise aus Zellulose bestehen, und
   **dass** die einzelnen ringförmigen Filterscheiben (24) außenumfangsseitig Ausnehmungen (26, 28, 34) aufweisen, die durch Einschnitte, Einprägungen oder durch benachbarte Abstandhalter (32) zwischen den Filterscheiben (24) gebildet sind.

2. Filtervorrichtung nach Anspruch 1, **dadurch gekennzeichnet, dass** die Filterelemente in Übereinanderanordnung die Baueinheit bilden und mit ihrem jeweiligen Elementmaterial (14, 16) eine Unfiltratseite (18) von einer Filtratseite (20) separieren, die von dem jeweiligen Elementmaterial (14, 16) umfasst ist.

3. Filtervorrichtung nach einer der vorstehenden Ansprüche, **dadurch gekennzeichnet, dass** das Filterelement (10) für die Partikelabreinigung ein mehrlagiges Elementmaterial (14) aufweist und/oder dass die Scheiben (24) vollständig aus Zellulose bestehen.

4. Filtervorrichtung nach einem der vorstehenden Ansprüche, **dadurch gekennzeichnet, dass** die aus den Filterelementen (10, 12) gebildete Baueinheit endseitig jeweils eine Endkappe (36, 38) aufweist, von denen die eine (36) das Filterelement (10) für die Partikelabreinigung bodenseitig abschließt und die andere, das Filterelement (12) für die Abreinigung der Ölalterungsprodukte kopfseitig abschließende Endkappe (38) eine Durchlassöffnung (40) für den Filtratstrom aufweist.

5. Filtervorrichtung nach einem der vorstehenden Ansprüche, **dadurch gekennzeichnet, dass** auf der Filtratseite (20) der Baueinheit mindestens eine Drossel- oder Blendenstelle (48) vorhanden ist, die den Fluidvolumenstrom zwischen den einzelnen Filterelementen (10, 12) in einem vorgebbaren Verhältnis aufteilt.

6. Filtervorrichtung nach Anspruch 5, **dadurch gekennzeichnet, dass** die Drossel- oder Blendenstelle (48) am Fluidausgang (52) des Filterelementes (10) für die Partikelfiltration und am benachbarten Eingang (54) des Filterelementes (12) für die Abreinigung der Ölalterungsprodukte auf der Filtratseite (20) angeordnet ist.

7. Filtervorrichtung nach Anspruch 5 oder 6, **dadurch gekennzeichnet, dass** die Drossel- oder Blendenstelle (48) in einer Zwischenkappe (50) zwischen dem einen (10) und dem anderen Filterelement (12) angeordnet ist.

8. Filtervorrichtung nach einem der vorstehenden Ansprüche, **dadurch gekennzeichnet, dass** alle Filterscheiben (24) mit dem Zellulosematerial dieselben Filtereigenschaften aufweisen, insbesondere dieselbe Filterfeinheit besitzen und dass die ringförmigen Filterscheiben (24) von ihrem Elementmaterial her allesamt gleich aufgebaut sind.

9. Filtervorrichtung nach einem der vorstehenden Ansprüche, **dadurch gekennzeichnet, dass** ein geschlossen scheibenförmige Elementmaterial (16) der ringförmigen Filterscheiben aus einer Filterronde gebildet ist, die vorzugsweise vom Blattbildner ist.

## Claims

1. Filter apparatus consisting of a combination of various filter elements (10, 12) combined to form a structural unit, one (10) of these filter elements serving to clean particles and another filter element (12) to clean oil oxidation products from a fluid stream, the filter elements (10, 12) being connected in parallel with each other for the aforementioned cleaning of the fluid stream,
**characterised in that**

   the filter element (10) for particle cleaning comprises a pleated element material (14), the filter element (12) for receiving the oil oxidation products is formed by individual annular discs (24) lying on top of one another, said discs consisting at least partially of cellulose, and
   the individual annular filter discs (24) have recesses (26, 28, 34) on their outer circumferential side which are formed by incisions, indentations or by adjacent spacers (32) between the filter discs (24).

2. Filter apparatus according to claim 1, **characterised**

**in that** the filter elements form the structural unit by lying on top of one another and, with their respective element material (14, 16), separate an unfiltered medium side (18) from a filtrate side (20), which is surrounded by the respective element material (14, 16).

3.  Filter apparatus according to any of the preceding claims, **characterised in that** the filter element (10) for particle cleaning comprises a multi-layered element material (14) and/or **in that** the discs (24) consist completely of cellulose.

4.  Filter apparatus according to any of the preceding claims, **characterised in that** the structural unit formed by the filter elements (10, 12) comprises an end cap (36, 38) at each end, one (36) of said end caps sealing the filter element (10) for particle cleaning at the bottom and the other end cap (38), sealing the filter element (12) for cleaning oil oxidation products at the top, comprising a through opening (40) for the filtrate stream.

5.  Filter apparatus according to any of the preceding claims, **characterised in that** at least one constriction or aperture point (48) is provided on the filtrate side (20) of the structural unit, said point dividing the fluid volume stream between the individual filter elements (10, 12) in a predefinable ratio.

6.  Filter apparatus according to claim 5, **characterised in that** the constriction or aperture point (48) is arranged at the fluid outlet (52) of the filter element (10) for particle filtration and at the adjacent inlet (54) of the filter element (12) for cleaning oil oxidation products on the filtrate side (20).

7.  Filter apparatus according to either claim 5 or claim 6, **characterised in that** the constriction or aperture point (48) is arranged in an intermediate cap (50) between one filter element (10) and the other filter element (12).

8.  Filter apparatus according to any of the preceding claims, **characterised in that** all filter discs (24) with the cellulose material have the same filter properties, in particular the same filter grade, and **in that** the annular filter discs (24) are all constructed in the same manner with regard to their element material.

9.  Filter apparatus according to any of the preceding claims, **characterised in that** a closed disc-shaped element material (16) of the annular filter discs is formed by a filter blank, which is preferably from the sheet former.

**Revendications**

1.  Appareil de filtration constitué d'une combinaison rassemblée en une unité de construction de divers éléments (10, 12) de filtre, dont un élément (10) de filtre sert à épurer un courant de fluide de particules et un autre élément (12) de filtre a en épurer des produits de vieillissement d'huile, dans lequel les éléments (10, 12) de filtre sont montés respectivement en parallèle pour l'épuration concernée du courant de fluide,
    **caractérisé**

    **en ce que** l'élément (10) de fluide pour l'épuration de particules a un matériau (14) d'élément plissé,
    **en ce que** l'élément (12) de filtre pour l'absorption de produits de vieillissement d'huile est formé de rondelles (24) annulaires individuelles en un agencement superposé, qui sont au moins en partie en cellulose, et
    **en ce que** les rondelles (24) annulaires de filtre individuelles ont, du côté du pourtour extérieur, des évidements (26, 28, 34), qui sont formés par des entailles, des empreintes ou par des entretoises (32) voisines entre les rondelles (24) de filtre.

2.  Appareil de filtration suivant la revendication 1, **caractérisé en ce que** les éléments de filtre en agencement superposé forment l'unité de construction et, par leur matériau (14, 16) respectif d'élément, séparent un côté (18) de non filtrat d'un côté (20) de filtrat, qui est entouré par le matériau (14, 16) d'élément respectif.

3.  Appareil de filtration suivant l'une des revendications précédentes, **caractérisé en ce que** l'élément (10) de filtre pour l'épuration de particules a un matériau (14) d'élément stratifié et/ou **en ce que** les rondelles (24) sont entièrement en cellulose.

4.  Appareil de filtration suivant l'une des revendications précédentes, **caractérisé en ce que** l'unité de construction formée des éléments (10, 12) de filtre a, du côté de l'extrémité, respectivement une coiffe (36, 38) d'extrémité, dont l'une (36) ferme du côté du fond, l'élément (10) de filtre pour l'épuration de particules et l'autre coiffe (38) d'extrémité, fermant, du côté de la tête, l'élément (12) de filtre pour l'épuration des produits de vieillissement d'huile, a une ouverture (40) de passage du courant de filtrat.

5.  Appareil de filtration suivant l'une des revendications précédentes, **caractérisé en ce que**, du côté (20) du filtrat de l'unité de construction, il y a au moins un point (48) d'étranglement ou de diaphragme, qui subdivise, suivant un rapport pouvant être donné à l'avance, le courant de fluide en volume entre les divers éléments (10, 12) de filtre.

6. Appareil de filtration suivant la revendication 5, **caractérisé en ce que** le point (48) d'étranglement ou de diaphragme est disposé à la sortie (52) pour du fluide de l'élément (10) de fluide pour la filtration des particules et, du côté (20) du filtrat à l'entrée (54) voisine de l'élément (12) de filtre pour l'épuration des produits de vieillissement d'huile.

7. Appareil de filtration suivant la revendication 5 ou 6, **caractérisé en ce que** le point (48) d'étranglement ou de diaphragme est disposé dans une coiffe (50) intermédiaire entre le un (10) et l'autre éléments (12) de filtre.

8. Appareil de filtration suivant l'une des revendications précédentes, **caractérisé en ce que** toutes les rondelles (24) de filtre en le matériau de cellulose ont les mêmes propriétés de filtration, en possédant en particulier la même finesse de filtration, et **en ce que** les rondelles (24) annulaires de filtre sont toutes constituées pareillement du point de vue de leur matériau d'élément.

9. Appareil de filtration suivant l'une des revendications précédentes, **caractérisé en ce qu'**un matériau (16) d'élément, fermé en forme de rondelle, des rondelles annulaires de filtre est formé d'un rond de filtre, qui provient, de préférence, d'un générateur de feuilles.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3334512 B1
- DE 102005014360 A1
- DE 102018202178 A1
- DE 1084242
- WO 2018082799 A1